(19) Europäisches Patentamt
European Patent Office
Office européen des brevets

(11) **EP 4 764 014 A1**

(12) **EUROPEAN PATENT APPLICATION**

(43) Date of publication:
**24.06.2026 Bulletin 2026/26**

(21) Application number: **24222332.9**

(22) Date of filing: **20.12.2024**

(51) International Patent Classification (IPC):
*C22B 5/02* $^{(2006.01)}$    *C22B 7/00* $^{(2006.01)}$
*C22B 23/02* $^{(2006.01)}$    *C22B 3/00* $^{(2006.01)}$
*C22B 26/12* $^{(2006.01)}$    *H01M 10/54* $^{(2006.01)}$
*C22B 7/02* $^{(2006.01)}$

(52) Cooperative Patent Classification (CPC):
**C22B 5/02; C22B 7/001; C22B 7/02; C22B 23/02;
C22B 23/0423; C22B 23/043; C22B 26/12;
H01M 10/54**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Umicore**
**1000 Brussels (BE)**

(72) Inventors:
• **YAGI, Ryohei**
  **2250 Olen (BE)**
• **VAN DER MERWE, Marnu**
  **2250 Olen (BE)**

(54) **ADVANCED FUMING**

(57)    The invention is in the field of pyrometallurgy and describes a process for the recovery of lithium by fuming.

The process comprises smelting Li-ion batteries or their waste in a furnace with slag formers, resulting in a molten bath with distinct alloy and slag phases, and flue dust. Notably, at least 30% of the lithium is transferred to the flue dust under the chosen conditions without adding alkali or earth alkali halides.

Li can then be recovered from the flue dust, valuable metals, such as Co and/or Ni, can be recovered from the alloy, and the remaining slag can be re-used in new smelting operations.

**Description**

The invention is in the field of pyrometallurgy and describes a process for the recovery of lithium by fuming.

Pyrometallurgical processes can be used for the recycling of Li-ion batteries. In such processes valuable metals are concentrated in an alloy phase, while other compounds, such as lithium, are typically concentrated in a slag phase.

There are few known processes for recycling Li-ion batteries, wherein valuable metals, such as nickel, cobalt and copper, are reduced to metal and concentrated in an alloy phase, while lithium goes to the gas phase at high temperature. Such a process is known as "fuming" of lithium.

Hu et al. (Recovery of Co, Ni, Mn, and Li from Li-ion batteries by smelting reduction - Part I: A laboratory-scale study: Journal of Power Sources, vol. 483, 2021, 228936) conducted a laboratory-scale study on the recovery of Co, Ni, Mn, and Li from Li-ion batteries. It was found that Li vaporizes into the gas phase when de-coked electrode materials from batteries are melted with graphite at 1600 °C under a reducing atmosphere. During this process, Co, Ni and Mn are fully reduced, along with impurities such as Al, Fe, Si, forming an alloy phase. There was no or negligible amount of slag phase obtained due to full reduction of metals to an alloy phase. The authors conclude that this is substantially different from an industrial smelting reduction process, in which a slag phase is present to prevent the oxidation of molten alloy and for refining purposes. It is also described that Li is reduced to metal vapor or volatile lithium halides in such reducing atmosphere. It is further concluded that a higher graphite content could reduce more $LiAlO_2$ and let more volatile species of lithium be concentrated in the flue dust and that reducing conditions are beneficial to increase the Li fuming yield.

Hu et al. (Recovery of Co, Ni, Mn, and Li from Li-ion batteries by smelting reduction - Part II: A pilot-scale demonstration: Journal of Power Sources, vol. 483, 2021, 229089) also performed smelting of Li-ion batteries in an Electric Arc Furnace. The experiments were performed under reducing conditions, and consequently 85.3 - 91.5% of Mn contained in the Li-ion batteries was reduced and concentrated in the alloy phase. CaO based slag formers, such as lime and dolomite, were added to decrease the melting point of the slag, compensating the alumina originating from the electrode materials, which would otherwise increase the melting point of the slag to a level where a smelting process becomes challenging. The obtained slag was an $Al_2O_3$-$CaO$-$SiO_2$-$Li_2O$ system containing less than 0.53 wt% of MnO. It is reported that under these process conditions around 60-70% of the Li was recovered in the EAF flue dust, while the other 30-40% of the Li was lost in the slag. The prior art teaches that a lower Li yield is attributed to a lower $CaO / Al_2O_3$ ratio in the formed slag. It is also reported that the better Li fuming yield was achieved with a ratio of CaO to $Al_2O_3$ of 1.8, compared to 0.8. It was suggested that the Al content in Li-ion batteries needs to be reduced to a minimum level. Otherwise, the formed alumina has to be neutralized in the slag and, consequently, increases the slag volume.

The above prior art shows the results in a Tamman furnace or Electric Arc Furnace without injection of any gases.

EP4347906 B1 and Ren et al. (Recovery of valuable metals from spent lithium-ion batteries by smelting reduction process based on MnO-SiO2-Al2O3 slag system, Advances in Molten Slags, Fluxes, and Salts: Proceedings of the 10th International Conference on Molten Slags, Fluxes and Salts, 2016, pp. 211-218) describe processing of Li-ion batteries to recover Ni and Co in the alloy phase while enriching Mn in the slag phase with limited addition of flux. Both are silent about fuming of Li.

KR102559495B1 describes a process, in which a major part of lithium is fumed as LiCl from a molten slag. Key of the invention is the addition of a fuming agent, such as alkali and/or earth alkali chloride, to fume the Li.

Alternatively, Li fuming can be done by addition of fluoride compounds instead of chloride compounds.

Fuming of Li is typically not mentioned in the prior art of classic battery recycling, which has a clear focus on the recovery of valuable metals, such as Co and Ni, in an alloy phase. This typically requires (strongly) reducing conditions. If Li fuming is mentioned in this context, reducing conditions are considered beneficial for the fuming of Li. Few processes describe Li fuming in more detail, typically including the addition of chlorides or fluorides as fuming agents.

It is therefore an aim of the present invention to provide an alternative process for the recovery of Ni and Co from Li-ion batteries or their waste, which also allows to recover Li from the slag by fuming.

A first aspect describes a process for the recovery of lithium comprising the steps:

-    providing a furnace;

-    feeding to the furnace a charge comprising slag formers and Li-ion batteries or their waste, wherein the Li-ion batteries or their waste contain Ni and/or Co, Li, Mn and Al;

-    smelting the charge, thereby obtaining a molten bath with an alloy phase and a slag phase, and flue dust;

wherein the slag phase comprises a composition according to:

$$LiO > 1\%;$$

$$4\% < MnO < 60\%;$$

$$CaO/Al_2O_3 < 1.5;$$

$$MnO/Al_2O_3 > 0.15;$$

$$0.3 < Al_2O_3/(Al_2O_3 + MnO + CaO) < 0.75 ;$$

and,

wherein at least 30% of Li contained in the molten bath charge is transferred to the flue dust by fuming without addition of alkali and/or earth alkali halide to the process.

The above percentages are understood as percentages by weight.

Li-ion batteries or their waste typically contain Ni, or Co, or both. Additionally, Li, Mn and Al will be present. Often also Fluorine (F) is contained in those Li-ion batteries as component of binder (between CAM and collector) and/or electrolyte.

The above-mentioned prior art teaches Li fuming in (strongly) reducing conditions, consequently concentrating a significant amount of Mn in the alloy phase. Mn reduction to the alloy requires intense reducing conditions, such as a $pO_2$ of $10^{-12}$ (10 to the minus 12), in which the reaction of Li-ion batteries or their waste in the furnace becomes endothermic and external heat has to be supplied to maintain the operational temperature.

To obtain battery grade Ni and Co salts from the alloy resulting from such an operation, Mn is typically separated by leaching. This is followed by expensive refining technologies, such as solvent extraction, generally increasing the operational costs. Furthermore, the value of Mn is much less compared to Ni and/or Co, which makes the separation of Mn less appealing in an industrial setup.

To avoid that too much Mn is reduced to the alloy phase, oxidizing conditions are applied, so that metals such as Mn preferably stay as oxides in slag phase. A MnO-rich slag composition minimizes the flux addition, and allows that the slag volume is kept low. Therefore, the slag phase comprises at least 4% MnO. At least 8% MnO are preferred.

The above-mentioned prior art also suggests to keep a high CaO to $Al_2O_3$ ratio in the obtained slag, but this will increase the volume of obtained slag due to addition of a large quantity of CaO, and consequently more Li remains in the slag.

A higher CaO to $Al_2O_3$ ratio (for example by addition of limestone) will also result in more CaO being carried over to the flue dust, resulting in dilution of the Li concentration in the flue dust and therefore complicating Li recovery from the flue dust.

Keeping the ratio of CaO to $Al_2O_3$ at less than 1.5 helps to limit the amount of slag and also to avoid a too high operation temperature. Higher operation temperatures increase the risk of refractory wear.

The same applies for the condition $0.3 < Al_2O_3/(Al_2O_3 + MnO + CaO) < 0.75$.

In a further aspect, smelting the charge is performed at a $pO_2$ of $10^{-7}$ (10 to the minus 7) to $10^{-11}$ (10 to the minus 11) atm, preferably at a $pO_2$ of $10^{-8}$ to $10^{-10}$ atm.

These conditions distinguish from strongly reducing conditions often applied in prior art processes, i.e. they are more oxidizing. An indication for this is also the pronounced content of manganese in the slag, namely $4\% < MnO < 60\%$ or $8\% < MnO < 40\%$.

On the other hand, applying too oxidizing conditions may lead to a too high heat generation.

In a further aspect, the ratio of Li to Al in the charge is 0.15 or more.

This condition has a positive impact on Li fuming as the slag quantity is reduced, and also excess heat generation by oxidation of Al is avoided.

A further aspect describes a process according to the first aspect, wherein the slag phase comprises at least 50% of the Mn contained in the charge, or at least 80% of the Mn contained in the charge.

Under the chosen reaction conditions, particularly the oxidation level $pO_2$, at least 50% of the Mn contained in the charge reports to the slag. Preferably at least 80% of the Mn contained in the charge reports to the slag, indicating more oxidizing conditions.

The obtained slag typically contains $P_2O_5$ in a range of $0.5\% < P_2O_5 < 10\%$.

A further aspect describes a process according to the first aspect, wherein the slag phase has a composition by weight according to $Al_2O_3 + SiO_2 + CaO + Li_2O + MnO + FeO + MgO + P_2O_5 > 85\%$.

In a further aspect, smelting the charge is performed at a temperature of 1300-1650 °C. A temperature of 1450-1600 °C is preferred, a temperature of 1500-1550 °C more preferred.

In a further aspect, the process is further comprising a step of adding an amount of an alkali and/or earth alkali halide (Hal) to the molten bath, wherein the amount of halide is determined by the formulae: $(Li_c) - (Li_d) = (Li_s)$ and $(Hal) \geq$

$1.1*(Li_S)$; and wherein $(Li_c)$ is the total amount of lithium in the charge, $(Li_d)$ is the amount of lithium in the flue dust, and $(Li_s)$ the amount of lithium in the slag.

In this regard it is convenient to determine the amount of lithium in the charge $(Li_c)$ upfront, for example by chemical analysis, then analyze the amount of lithium in the flue dust $(Li_d)$ during the process, and calculate the remaining amount of lithium in the slag $(Li_S)$, rather than having to perform an additional analysis from the hot slag. It is of course equally possible to take a sample from slag and estimate Li(s).

Based on $(Li_s)$ a stoichiometric excess of halide (Hal) is chosen, such as 110% or more, to allow an almost complete fuming of Li from the slag. Preferred conditions are (stoichiometric) 130% or more of (Hal), or 140% or more of (Hal), or 150% or more of (Hal). Amounts of 160% or more of (Hal) typically do not have an additional beneficial effect on the fuming yield anymore and only increase the cost of the process. (Hal) is typically a chloride or fluoride.

For example by addition of a chlorination agent, such as $CaCl_2$, remaining Li in the slag is converted to LiCl. While a fuming according to the present invention can decrease the $Li_2O$ content in the slag to about 7-10 wt%, a chlorination can further decrease the content of $Li_2O$ in the slag to about 1 wt %. This refers to the concentration of $Li_2O$ in the entire slag.

Optionally, this can even be done in a separated furnace, operating under different, probably more reducing conditions.

Compared to the known chlorination fuming using $CaCl_2$, the combination of fuming according to the present inventions and chlorination fuming can reduce the consumption of chlorination agents (e.g. $CaCl_2$), making the process more efficient.

In a further aspect, the alkali and/or earth alkali halide (Hal) is NaCl, KCl, $CaCl_2$, $MgCl_2$, NaF or $CaF_2$.

In an industrial setup the focus is more on the commonly available chlorides. Fuming with the respective fluorides is equally possible, but less preferred for practical reasons, especially the follow-up treatment of flue dust and off gases, as also unwanted HF can be formed.

In a further aspect, the process is further comprising the steps:

- separating the alloy phase and the slag phase; and,

- acidic leaching, thereby obtaining the majority of Ni and/or Co in solution.

Under the conditions of the present invention, the alloy contains less than 5% Mn.

The acidic leaching is typically done after letting cool down the (separated) alloy phase, preferably to room temperature.

Typically, the alloy is leached in inorganic acid, such as $H_2SO_4$ or HCl.

For some metals, such as copper, additionally an oxidizing reagent might be needed.

There are multiple options for the acidic leaching.

Therefore, in a further aspect, the alloy is fully leached, with subsequent separate steps for removal of contained Cu and/or Fe, and one or more of Co, Ni, and Mn (the typical NMC metals).

In a further aspect, Co, Ni, and/or Mn are selectively leached together with Cu, while the majority of Fe is rejected.

In a further aspect, Co, Ni, and/or Mn are selectively leached, while the majority of Fe and Cu is rejected.

Selective leaching can for example be achieved by controlling the pH (amount of acid added) or by controlling the amount of oxidizer added.

Solvent extraction (SX) can optionally also be applied to separate impurities or selected metals.

Last step is typically a crystallization or a precipitation of valuable metals such as Co and/or Ni. Or, also a removal of the aqueous solvent is possible, especially if the solution is pure enough. Therefore, in a further aspect, the process further comprises a step of crystallizing or precipitating of Ni and/or Co from solution. Conditions for either crystallizing or precipitating are well known to the skilled person.

A further aspect describes a process, wherein the flue dust comprises a composition by weight according to: 5 % < Li < 30% and 10% < F < 55%, and, wherein the molar ratio of Li/F is 0.1 or more.

In a further aspect, the process further comprises a leaching of the flue dust, wherein the leaching comprises carbonation leaching or acidic leaching, and an addition of $CaCl_2$.

The obtained flue dust can be processed using either a combination of carbonation leaching followed by the addition of $CaCl_2$, or acidic leaching with $CaCl_2$ addition.

Carbonation leaching is a process wherein carbon dioxide $(CO_2)$ is used to leach metals from the flue dust. The $(CO_2)$ is dissolved in water to form carbonic acid $(H_2CO_3)$, which then reacts for example with Li compounds. Carbonation leaching is particularly suitable for flue dust containing a high quantity of $Li_2CO_3$, as it effectively dissolves $Li_2CO_3$ into the solution.

Acidic leaching with $CaCl_2$ addition is particularly suitable for flue dust containing both $Li_2CO_3$ and LiF, as it converts Li into soluble LiCl while fixing F as $CaF_2$, resulting in its precipitation.

Soluble compounds are then separated from the solid material.

A further aspect describes a flue dust comprising a composition by weight according to 5 % < Li < 30% and 10% < F < 55%, and, wherein the molar ratio of Li/F is 0.1 or more.

Fluorine (F) is typically contained in batteries, for example in binder or electrolyte. Compared to that, chlorine (Cl) is less typical, and can be found only in minor amounts or will even be absent. Focus for the fuming is therefore on the fluorides.

Analysis shows that under the conditions of the present invention the flue dust can contain different Li species, such as LiF, LiCl, $Li_2CO_3$ or $Li_2O$, all obtained in the fuming process. Independent of the exact chemical composition, the fuming process achieves a concentration of lithium in the flue dust, which makes any follow-up operation much easier compared to isolating the lithium from a slag, in which it is rather diluted.

A molar ratio of Li/F of 0.1 or more has been observed in the present process.

Flue dust is typically collected in the so-called off-take zone or gas cleaning system of a furnace. All types of equipment can be installed in the off-take zone, such as a dust-catcher, baghouse filter, cyclone separator, electrostatic precipitator, scrubber, Venturi scrubber or condenser. Alternatively, parts of the off-take zone can be named by a specific function rather than by referring to a specific equipment, for example cooling zone (cooling section), condensation zone (condensation section) or the like.

When top-feeding the charge, typically so-called "entrainment" can be observed, especially when the charge is in the form of a powder. In the context of a furnace, entrainment refers to the unintended transport of parts of the feed materials into the off-take zone of the furnace. Thus, even if metals like Ni or Co do not fume from the molten bath, nevertheless traces of them can be found in the flue dust. Under the conditions of the present invention, the following (varying) percentages have been found in the flue dust:

$$0.04\% < Ni < 5.2\%$$

$$0.02\% < Co < 5.4\%$$

$$0.02\% < Cu < 5.3\%$$

$$0.01\% < Mn < 3.5\%$$

$$0.1\% < Al_2O_3 < 3.5\%$$

$$0.1\% < CaO < 8.5\%$$

$$0.2\% < P_2O_5 < 6.5\%$$

Examples of factors that can have an influence on the entrainment:

a) Gas Flow Rate: Higher gas flow rates can increase the velocity of the gas, which can carry more particles into the off-take zone.

b) Particle Size: Finer particles of the feed material are more easily entrained because they have less mass and are more susceptible to being carried by the gas flow.

c) Other Feed Material Properties: The physical and chemical properties of the feed material, such as the moisture content, can influence how easily particles are entrained.

d) Operational Conditions: Conditions such as temperature and pressure within the furnace can also play a role in entrainment.

e) Furnace Design: The design of the furnace, including the shape and size of the off-take zone, can impact the flow dynamics and the likelihood of entrainment.

A further aspect describes a process, wherein an $O_2$-bearing gas is introduced into the molten bath by submerged injection.

Submerged injection creates turbulences in the molten bath, leading to better mixing of the injected gases with the molten material and a larger amount of carry-over gas from the molten bath, which can improve the efficiency of reactions, particularly also of Li fuming.

Moreover, submerged injection can improve the heat transfer within the molten bath, helping to maintain a consistent temperature and reducing the risk of localized overheating.

Submerged injection also allows more flexible control of the $pO_2$, thus for example also keeping Mn in oxidized form is less challenging.

Submerged injection is especially powerful when applied to a feed with high carbon content, giving precise control of the $pO_2$.

A further aspect describes a process, wherein an $O_2$-bearing gas is introduced into the molten bath via at least two different injection points.

The at least two injection points create more turbulence in the molten bath, enhancing the mixing of the molten material. This leads to a more uniform temperature and composition throughout the bath. Moreover, better mixing can improve the efficiency of reactions, particularly also of Li fuming.

Generally, the process can be better controlled, for example with regards to temperature and the desired $pO_2$ level.

A further aspect describes the use of the obtained slag as slag former in a process according to the first aspect, thereby partially or fully replacing slag formers in the step of feeding.

Re-using the obtained slag in new operations allows for a greater flexibility in choosing operating conditions, such as the $pO_2$-level of the process. For example, when more oxidizing conditions are used, thereby sending more Co and/or Ni to the slag, these valuable metals would be recovered in a following operation cycle, where more reducing conditions could be used to recover more of the Co and/or Ni.

"Li-ion batteries or their waste" are, for example, new or waste Li-ion batteries, spent or end-of-life batteries (EOL), production or battery scrap, electrode materials or preprocessed battery materials, such as after shredding or sorting. Also "Black Mass" is explicitly understood to fall under "Li-ion batteries or their waste".

"Black Mass" (BM), "Black Matter" or "Black Powder" is a very interesting starting material for recycling via smelting processes. The expression "Black Mass" is typically used in industry to describe an intermediate product originating from Li-ion batteries or their waste. For example, black mass may be produced through shredding and separation of pyrolyzed end-of-life (EOL) lithium ion batteries, or in another example through shredding EOL lithium ion batteries with water, followed by drying and separation, or in another example by shredding and separation of production scrap of lithium ion batteries. It is thus clear that while the expression Black Mass is frequently used in industry, the exact composition of these materials may vary significantly, depending on producer or application.

Black mass typically contains the majority of the cathode materials and anode materials of the batteries, together with fractions of other battery components. The resulting Black Mass is typically a fine, often black, powder material.

In the context of this invention, Black Mass is defined as a powder obtained from Li-ion battery materials or their waste, which contains appreciable amounts of Li, Co and/or Ni.

The following examples illustrate the invention and are not intended to limit the scope of the invention in anyway.

## EXAMPLES

Example 1

500 kg of Black Mass together with 2 kg of limestone was fed to a furnace with a diameter of 1 m. A bath temperature of 1500-1550 °C was maintained, which is suitable to maintain both the slag and the alloy sufficiently fluid for easy tapping and handling. The heat was supplied by the oxidation of Al and C in the Black Mass, using submerged $O_2$ injection.

The injection rate was chosen to have a $pO_2$ of $10^{-8}$. Natural gas was added to compensate for heat losses in the furnace. After 1 hour of heating, the produced alloy and slag were separated by tapping.

Table 1 shows the analyses of the input and output phases of the process. The remaining percentages in the Black Mass are typically hydrogen, oxygen, and organic compounds. Li in the slag was present as $Li_2O$. The remaining percentages in the flue dust are typically carbon and oxygen, for example in the form of $Li_2CO_3$, as well as $H_2O$ due to the hygroscopic nature of the flue dust. Carbon content is typically not measured in the flue dust. Under the chosen process conditions, significant quantities of flue dust were captured.

Table 1

| Input | Composition (%) | | | | | | | | | | |
|---|---|---|---|---|---|---|---|---|---|---|---|
| | Ni | Co | Cu | SiO2 | CaO | Al (Al2O3) | Li | F | Mn (MnO) | P (P2O5) | C |
| **Black Mass** | 14.5 | 4.8 | 3.1 | | | 4.5 | 3.1 | 2.2 | 4.5 | 0.4 | 26.5 |
| **Limestone** | | | | 4.8 | 53.3 | | | | | | 11.4 |
| Output (wt%) | | | | | | | | | | | |
| **Alloy** | 63.7 | 21.1 | 13.5 | 0 | 0 | 0 | 0 | | 0.8 | 0 | |
| **Slag** | 0.9 | 0.3 | 0.2 | 0.1 | 1.2 | (51.0) | 3.2 | | (33.6) | (1.5) | |
| **Flue dust** | 2.9 | 1.5 | 0.9 | 0.0 | 0.1 | (1.7) | 25.7 | 43.6 | (0.6) | (1.1) | |

Conclusion: The example shows that an alloy phase was produced containing 63.7 wt% Ni, 21.1 wt% Co and 13.5 wt% Cu. The CaO/$Al_2O_3$ ratio of the slag produced was 0.02 and it contained 33.6wt% of MnO. Flue dust was also produced, which contained 25.7 wt% Li. The high quantity of Li in the flue dust indicates that Li was fumed from the molten bath. The presence of Ni, Co and Cu in the flue dust indicates that a small amount of the feed material was carried to the flue dust (industrially known as: "entrainment" or "carry over"). The Li recovery from the feed to the flue dust was 82.6 wt%.

Example 2

500 kg of Black Mass together with 45 kg of limestone was fed to a furnace with a diameter of 1 m. A bath temperature of 1500-1550 °C was maintained, which kept both the slag and the alloy sufficiently fluid for easy tapping and handling. The heat was supplied by the oxidation of Al and C in the Black Mass, using submerged $O_2$ injection. The injection rate was chosen to have a p$O_2$ of $10^{-8}$. Natural gas was added to compensate for heat losses in the furnace. After 1 hour of heating, the produced alloy and slag were separated by tapping.

TableTable shows the analyses of the input and output phases of the process. The remaining percentages in the Black Mass are typically hydrogen, oxygen, and organic compounds. Li in the slag was present as $Li_2O$. The remaining percentages in the flue dust are typically carbon and oxygen, for example in the form of $Li_2CO_3$, as well as $H_2O$ due to the hygroscopic nature of the flue dust. Under the chosen process conditions, significant quantities of flue dust were captured.

Table 2

| Input | Composition (%) | | | | | | | | | | |
|---|---|---|---|---|---|---|---|---|---|---|---|
| | Ni | Co | Cu | SiO2 | CaO | Al (Al2O3) I | Li | F | Mn (MnO) | P (P2O5) | C |
| **Black Mass** | 14.5 | 4.8 | 3.1 | | | 4.5 | 3.1 | 2.2 | 4.5 | 0.4 | 26.5 |
| **Limestone** | | | | 4.8 | 53.3 | | | | | | 11.4 |
| Output (wt%) | | | | | | | | | | | |
| **Alloy** | 63.6 | 20.7 | 13.2 | | | 0 | 0 | | 0.6 | 0 | |
| **Slag** | 0.6 | 0.4 | 0.3 | 1.9 | 20.6 | (37.6) | 3.7 | | (24.8) | (1.1) | |
| **Flue dust** | 2.9 | 1.5 | 1.3 | 0.1 | 1.9 | (1.7) | 22.5 | 43.5 | (0.6) | (1.1) | |

Conclusion: The example shows that an alloy was produced containing 63.6 wt% Ni, 20.7 wt% Co and 13.2 wt% Cu. The CaO/$Al_2O_3$ ratio of the slag produced was 0.55 and it contained 24.8 wt% MnO. Flue dust was also produced, which contained 22.5 wt% Li. The Li recovery from the feed to the flue dust was 72.6 wt%.

Example 3

500 kg of Black Mass together with 90 kg of limestone was fed to a furnace with a diameter of 1 m. A bath temperature of 1500-1550 °C was maintained, which kept both the slag and the alloy sufficiently fluid for easy tapping and handling. The heat was supplied by the oxidation of Al and C in the Black Mass, using submerged $O_2$ injection. The injection rate was chosen to have a p$O_2$ of $10^{-8}$. Natural gas was added to compensate for heat losses in the furnace. After 1 hour of heating, the produced alloy and slag were separated by tapping.

TableTable shows the analyses of the input and output phases of the process. The remaining percentages in the Black Mass are typically hydrogen, oxygen, and organic compounds. Li in the slag was present as $Li_2O$. The remaining percentages in the flue dust are typically carbon and oxygen, for example in the form of $Li_2CO_3$, as well as $H_2O$ due to the hygroscopic nature of the flue dust. Under the chosen process conditions, significant quantities of flue dust were captured.

Table 3

| Input | Composition (%) | | | | | | | | | | |
|---|---|---|---|---|---|---|---|---|---|---|---|
| | Ni | Co | Cu | SiO2 | CaO | Al (Al2O3) | Li | F | Mn (MnO) | P (P2O5) | C |
| Black Mass | 14.5 | 4.8 | 3.1 | | | 4.5 | 3.1 | 2.2 | 4.5 | 0.4 | 26.5 |
| Limestone | | | | 4.8 | 53.3 | | | | | | 11.4 |
| Output (wt%) | | | | | | | | | | | |
| Alloy | 62.5 | 20.4 | 13.4 | 0 | 0 | 0 | 0 | | 1 | 0 | |
| Slag | 0.5 | 0.2 | 0.1 | 3.1 | 33.5 | (30.6) | 3.5 | | (20.0) | (0.9) | |
| Flue dust | 2.4 | 1.6 | 0.5 | 0.1 | 3.2 | (1.4) | 17.4 | 48.1 | (0.5) | (0.9) | |

Conclusion: The example shows that an alloy was produced containing 62.5 wt% Ni, 20.4 wt% Co and 13.4 wt% Cu. The $CaO/Al_2O_3$ ratio of the slag produced was 1.10 and it contained 20.0 wt% MnO. Flue dust was also produced, which contained 17.4 wt% Li. The Li recovery from the feed to the flue dust was 68.9 wt%.

In the provided examples, oxidative conditions were maintained to inhibit the reduction of manganese (Mn) into the alloy phase. This resulted in the Mn content in the alloy being very low, while the MnO content in the slag exceeded 15 wt%. All examples demonstrated a high recovery rate of Li in the flue dust under the chosen conditions of the present invention.

Increasing the CaO/Al2O3 ratio adversely affected both the Li yield and the purity of the flue dust, due to greater entrapment of Li in the slag and increased entrainment of Ca to the flue dust.

## Claims

1. Process for the recovery of lithium comprising the steps:

   - providing a furnace;
   - feeding to the furnace a charge comprising slag formers and Li-ion batteries or their waste, wherein the Li-ion batteries or their waste contain Ni and/or Co, Li, Mn and Al;
   - smelting the charge at a $pO_2$ of $10^{-7}$ to $10^{-11}$ atm, thereby obtaining a molten bath with an alloy phase and a slag phase, and flue dust;
   wherein the slag phase comprises a composition according to: LiO > 1 %;

$$4\% < MnO < 60\%;$$

$$CaO/Al_2O_3 < 1.5;$$

$$MnO/Al_2O_3 > 0.15;$$

$$0.3 < Al_2O_3/(Al_2O_3 + MnO + CaO) < 0.75;$$

   and,
   wherein at least 30% of Li contained in the charge is transferred to the flue dust by fuming without addition of alkali and/or earth alkali halide to the process.

2. Process according to claim 1, wherein the ratio of Li to Al in the charge is 0.15 or more.

3. Process accordingto claim 1 or 2, wherein the slag phase has a composition by weight according to $Al_2O_3 + SiO_2 + CaO + Li_2O + MnO + FeO + MgO + P_2O_5 > 85\%$.

4. Process according to any one of claims 1 to 3, wherein the slag phase comprises at least 50% of the Mn contained in the charge.

5. Process according to any one of claims 1 to 4, wherein the smelting is performed at a temperature of 1300-1650 °C.

6. Process according to any one of claims 1 to 5, further comprising a step of adding an amount of an alkali and/or earth alkali halide (Hal) to the molten bath, wherein the amount of halide is determined by the formulae:

$$(Li_c) - (Li_d) = (Li_S) \text{ and } 1.1*(Li_S) = (Hal);$$

wherein $(Li_c)$ is the total amount of lithium in the charge, $(Li_d)$ is the amount of lithium in the flue dust, and $(Li_S)$ the amount of lithium in the slag.

7. Process according to claim 6, wherein the alkali and/or earth alkali halide (Hal) is NaCl, KCl, $CaCl_2$, $MgCl_2$, NaF or $CaF_2$.

8. Process according to any one of claims 1 to 7, wherein the flue dust comprises a composition by weight according to:

$$5\% < Li < 30\% \text{ and } 10\% < F < 55\%,$$

and,
wherein the molar ratio of Li/F is 0.1 or more.

9. Process accordingto any one of claims 1 to 8, further comprising a leaching of the flue dust, wherein the leaching comprises carbonation leaching or acidic leaching, and an addition of $CaCl_2$.

10. Process according to any one of claims 1 to 8, further comprising the steps:

- separating the alloy phase and the slag phase; and,
- acidic leaching, thereby obtaining the majority of Ni and/or Co in solution.

11. Process according to claim 10, further comprising a step of crystallizing or precipitating of Ni and/or Co from the solution.

12. Process according to any one of claims 1 to 8, wherein an $O_2$-bearing gas is introduced into the molten bath by submerged injection.

13. Process according to claim 12, wherein the $O_2$-bearing gas is introduced into the molten bath via at least two different injection points.

14. Process according to claim 1, wherein the slag is recycled back to the step of feeding in a new smelting operation, thereby partially or fully replacing the slag formers.

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | MAO ZHIYUAN ET AL: "Recycling of electrolyte from spent lithium-ion batteries", NEXT SUSTAINABILITY, vol. 3, no. 100015, 6 January 2024 (2024-01-06), pages 1-10, XP093278400, ISSN: 2949-8236, DOI: 10.1016/j.nxsust.2023.100015 * Eq. (1) * | | INV. C22B5/02 C22B7/00 C22B23/02 C22B3/00 C22B26/12 H01M10/54 C22B7/02 |
| | ----- | | |
| X | EP 4 113 700 A1 (YOUNG POONG CORP [KR]) 4 January 2023 (2023-01-04) | 1-11,14 | |
| Y | * abstract * * paragraph [0076] – paragraph [0079] * * paragraph [0081] * * paragraph [0052] * * tables 2, 3 * * paragraph [0043] * * paragraph [0111] * * paragraph [0051] * | 12,13 | |
| | ----- | | **TECHNICAL FIELDS SEARCHED (IPC)** |
| Y | WO 2011/035915 A1 (UMICORE NV [BE]; VERSHEURE KAREL [BE] ET AL.) 31 March 2011 (2011-03-31) | 12,13 | C22B H01M |
| A | * abstract * * page 2, line 7 - line 16 * * page 3, line 2 * | 1-11,14 | |
| | ----- | | |
| A | WO 2024/240609 A1 (UMICORE NV [BE]) 28 November 2024 (2024-11-28) * abstract * | 1-14 | |
| | ----- | | |
| | -/-- | | |

The present search report has been drawn up for all claims

| Place of search | Date of completion of the search | Examiner |
|---|---|---|
| The Hague | 16 May 2025 | Kim Lee, Bij Na |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | | Europäisches Patentamt<br>European Patent Office<br>Office européen des brevets | **EUROPEAN SEARCH REPORT** | **Application Number**<br>EP 24 22 2332 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GEORGI-MASCHLER T. ET AL: "Development of a recycling process for Li-ion batteries", JOURNAL OF POWER SOURCES, vol. 207, 1 June 2012 (2012-06-01), pages 173-182, XP055910047, AMSTERDAM, NL ISSN: 0378-7753, DOI: 10.1016/j.jpowsour.2012.01.152 * abstract * | 1-14 | |
| A | M VEST ET AL: "Slag Design for Lithium Recovery from Spent Batteries", CONFERENCE: INTERNATIONAL WORKSHOP ON METAL-SLAG INTERACTION, 1 January 2010 (2010-01-01), XP055663536, DOI: 10.13140/RG.2.1.3984.1525 * abstract * | 1-14 | |
| A | WO 2024/162658 A1 (YOUNG POONG CORP [KR]) 8 August 2024 (2024-08-08) * abstract * | 1-14 | |
| | | | TECHNICAL FIELDS SEARCHED (IPC) |
| A | QU GUORUI ET AL: "Efficient separation and recovery of lithium through volatilization in the recycling process of spent lithium-ion batteries", WASTE MANAGEMENT, ELSEVIER, NEW YORK, NY, US, vol. 150, 6 July 2022 (2022-07-06), pages 66-74, XP087145191, ISSN: 0956-053X, DOI: 10.1016/J.WASMAN.2022.06.039 [retrieved on 2022-07-06] * abstract * | 1-14 | |

The present search report has been drawn up for all claims

| Place of search | Date of completion of the search | Examiner |
|---|---|---|
| The Hague | 16 May 2025 | Kim Lee, Bij Na |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 22 2332

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | | Publication date | Patent family member(s) | | Publication date |
|---|---|---|---|---|---|
| EP 4113700 | A1 | 04-01-2023 | CN | 115769414 A | 07-03-2023 |
| | | | EP | 4113700 A1 | 04-01-2023 |
| | | | JP | 2023529256 A | 10-07-2023 |
| | | | KR | 20230037018 A | 15-03-2023 |
| | | | PH | 12022552713 A1 | 25-03-2024 |
| | | | US | 2024209474 A1 | 27-06-2024 |
| | | | WO | 2022234884 A1 | 10-11-2022 |
| WO 2011035915 | A1 | 31-03-2011 | EP | 2480697 A1 | 01-08-2012 |
| | | | JP | 5818798 B2 | 18-11-2015 |
| | | | JP | 2013506048 A | 21-02-2013 |
| | | | KR | 20120083430 A | 25-07-2012 |
| | | | PL | 2480697 T3 | 18-05-2020 |
| | | | SI | 2480697 T1 | 31-03-2020 |
| | | | TW | 201130184 A | 01-09-2011 |
| | | | US | 2012240729 A1 | 27-09-2012 |
| | | | WO | 2011035915 A1 | 31-03-2011 |
| WO 2024240609 | A1 | 28-11-2024 | EP | 4558652 A2 | 28-05-2025 |
| | | | KR | 20250055593 A | 24-04-2025 |
| | | | US | 2024384370 A1 | 21-11-2024 |
| | | | US | 2024384371 A1 | 21-11-2024 |
| | | | WO | 2024240609 A1 | 28-11-2024 |
| | | | WO | 2024240610 A2 | 28-11-2024 |
| WO 2024162658 | A1 | 08-08-2024 | KR | 102641852 B1 | 27-02-2024 |
| | | | WO | 2024162658 A1 | 08-08-2024 |

EPO FORM P0459

For more details about this annex : see Official Journal of the European Patent Office, No. 12/82

**EP 4 764 014 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 4347906 B1

- KR 102559495 B1

### Non-patent literature cited in the description

- **HU et al.** Recovery of Co, Ni, Mn, and Li from Li-ion batteries by smelting reduction - Part I: A laboratory-scale study. *Journal of Power Sources*, 2021, vol. 483, 228936
- **HU et al.** Recovery of Co, Ni, Mn, and Li from Li-ion batteries by smelting reduction - Part II: A pilot-scale demonstration. *Journal of Power Sources*, 2021, vol. 483, 229089

- **REN et al.** Recovery of valuable metals from spent lithium-ion batteries by smelting reduction process based on MnO-SiO2-Al2O3 slag system, Advances in Molten Slags, Fluxes, and Salts. *Proceedings of the 10th International Conference on Molten Slags, Fluxes and Salts*, 2016, 211-218